# EUROPEAN PATENT APPLICATION

(11) **EP 1 355 495 A1**
(43) Date of publication of application: **22.10.2003**
(21) Application number: 02008687.2
(22) Date of filing: 18.04.2002
(51) Int. Cl.: H04N 7/16

(54) **Method for processing stock exchange signalization in advanced digital recording systems**

(71) Applicant: DEUTSCHE THOMSON-BRANDT GMBH, 78048 Villingen-Schwenningen (DE)
(72) Inventor: Klausberger, Wolfgang, 30880 Laatzen (DE); Dirk, Adolph, 30952 Ronnenberg (DE); Ostermann, Ralf, 30167 Hannover (DE)

(57) **Abstract**

The invention comprises a method for storing more than movies on a disk, e. g. descriptions about the recorded essence (the metadata).
As TV-services transmit stock-, warrant- and investmentfund-rates via their teletext-pages, together with fundamental and technical stock-information-data, with the help of this metadata the user should have an easy access to the planning of his personal financial investments.
The invention comprises the preparation of stock-trade signals to the consumer. Apart from that, the user can get easy access to the daily and long-time development about his favorite stock and investment-funds values.

A problem to be solved by the invention is to find the base for the evaluation of trade-signals, which will be a resident metadata-archive stored in a digital recorder.
The local storage-management will generate stock-exchange metadata-descriptors with a special link to a software-implementation, which can be executed on the digital recording processor.

## Description

The invention relates to a method to generate stock-trade signals with the help of a digital recorder and a resident metadata-archive.

### Background

The standard application of the digital recording equipment is to record (and to playback) MPEG-2-transport-streams and also to store additional descriptions concerning the recorded movies (metadata) transmitted e. g. via DVB-systems.
The increased capacities for DVD and DVR-disks will enable the user to store not only movies on a disk but also descriptions about the recorded essence (the metadata).
TV services transmit stock, warrant and investment-fund rates via their teletext-pages, fundamental and technical stock-information-data are available from many web-pages. With the help of this metadata the user should have an easy access to the planning of his personal financial investments.

CN-A-1277412 describes a method for the stock-analysis, wherein stock exchange amount of different stages is being accumulated, said data being weighted according to time. WO-A-200133839 teaches a method to view various pre-recorded programming. Also, supplemental broadcast information can be viewed with this publication. Other inventions describe the adding of hyperlinks to broadcast pages (WO-A-200165420, WO-A-200165833). It is, also, well known the method of an interactive user-interface, especial for finance-planning purpose (US-A-20010023414, US-A-20010030667).

### Invention

The invention disclosed here goes beyond this analysis. Data are being saved and can be edited conforming to customer's needs. The invention is a method for storing data other than video or audio data on a disk, e. g. descriptions about the recorded essence (the metadata).

The major features of the invention comprise but are not limited to the following enumeration: application of this invention in a Consumer Electronic Equipment (Home Network, Digital Recording), filtering and saving of metadata (e. g. of stock-analysis-relevant data) in a free data-base or an archive on a harddisk or on an extern disk, adding of own personal metadata, transforming of metadata into XML, adding of indicators to the XML-descriptors belonging to said metadata or of an executable link, which will enable automatic starting of an analysing software.

As mentioned above, TV services transmit stock-, warrant- and investment-fund-rates via their teletext-pages. Also, fundamental and technical stock-information-data are available from many web-pages. With the help of this metadata the user should have an easy access to the planning of his personal financial investments.
The invention comprises the automatic or electronic preparation of stock-trade signals (buy, hold, sell) to the consumer. Apart from that, the user can get easy access to the daily and long-time development about his favorite stock and investment-fund values.
All relevant incoming stock-exchange-data are being parsed and converted into XML-descriptors. These XML-descriptors are being stored in a database. The generated XML-descriptors will encompass a special indicator or a link for a specific software-implementation, which can be executed on the digital recording processor.
The advantageous specific software implementation (e. g. stock-exchange trading-software) is intended for evaluation of the stored metadata and optionally further external indicators for generating trade signals. Another advantage of this solution is, that the stock-exchange trading-software can be either a simple or a professional one, just adapted to the users desire. The user will be able to apply a special (not generally used) indication-procedure to generate trade-signals. Also, an individual weighting of different technical indicators depending on economic trends is possible.

A problem to be solved by the invention is to find the base for the evaluation of trade-signals, which will be a resident metadata-archive stored in a digital recorder. This metadata-archive will be updated with stock-exchange-information coming from DVB-SI, Teletext or via the internet-access. Additional metadata can be received from TV-Anytime-documents, self-made-descriptors, etc.
This problem is solved by the method disclosed in claim 1.

The local storage-management will generate metadata-descriptors for the purpose of stock-exchange and will have a special link to a software-implementation, which can be executed on the digital recording processor. The location of the software can be either a disc or the hard-disc of the digital recorder.
User-defined metadata (watchlists) will help the user for comfortable "stock-watching". The titles of the list can be evaluated in a process running automatically in the background. Each updated StockDescriptor will start the process by its executable link. When a trading-signal will be generated by the process a special window will be highlighted on the display.
All relevant descriptors for the analysis of the stock-exchange will get an indicator (e. g. MIME) or a link (e. g. URI) for the selection of a software implementation which can be executed on the digital recording processor.

The following XML document will show an example of a metadata-descriptor for stock-data-analysis, including a mechanism for selecting an executable, e.g. an URN.

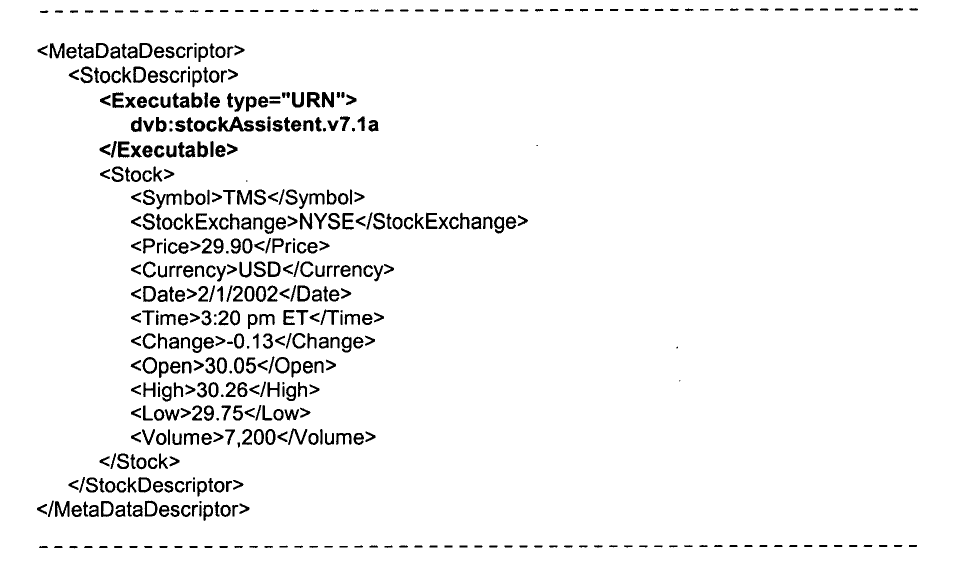

The location of the software code can be either internally on a disc or on the hard-disc of the digital recorder or also externally in the Internet.
User-defined metadata, which are watchlists or portfolio lists, will support and control the software in order to help the user for comfortable "stock-watching".

A GUI search-procedure can be: The user requests the current stock-rates from "MyWatchlist". The requested values are updated based on the latest metadata, and new metadata is generated and stored in the database. As a result, the GUI will show the current rates. The user will be enabled to start the stock-exchange-software for the evaluation of stock-trade-signals for the required values. As well, the titles of the list will be evaluated in a process running automatically in the background. Each updated StockDescriptor will start the process with the help of its executable link. As soon as a trading signal is generated by the process a special window will be highlighted on the display. Also, long-time statistics can be executed with these titles of a watchlist.

The following XML document will show a metadata-descriptor for a watchlist including a mechanism for selecting an executable, e. g. an URN.

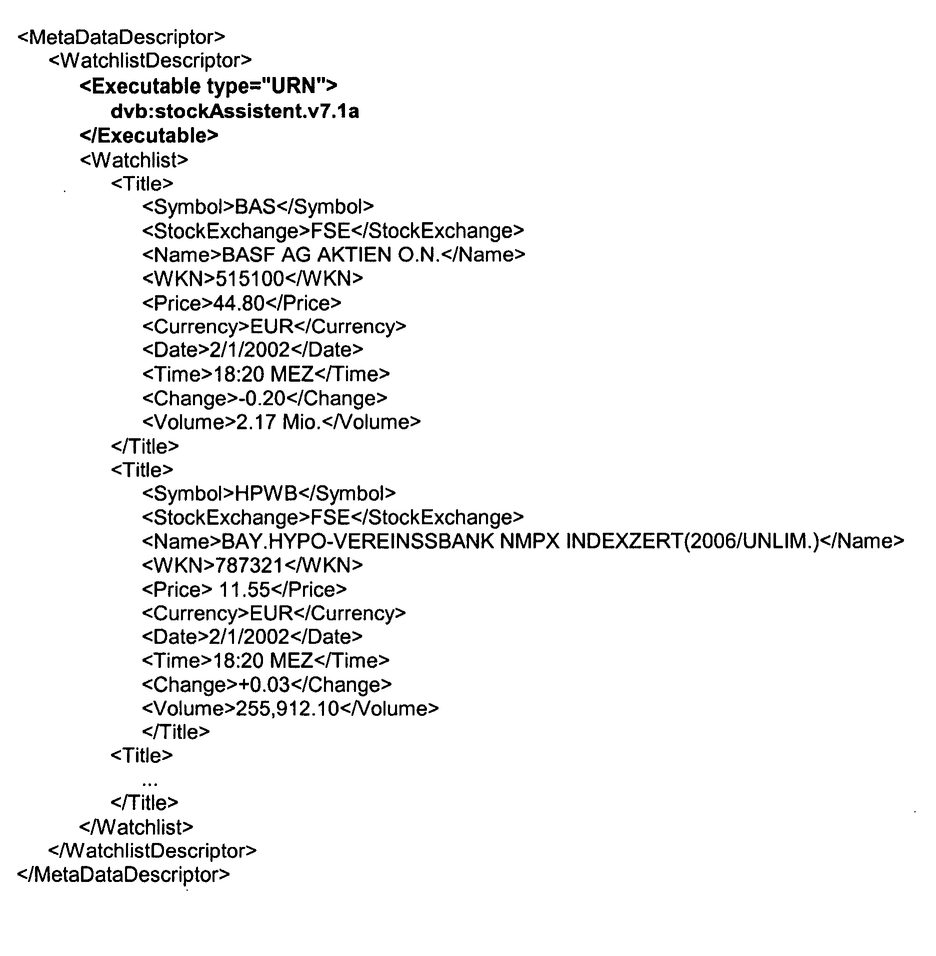

In principle, the inventive method is suited for electronically analyzing data amounts by a resident metadata-archive stored in a digital recorder, characterized in that the resident metadata-archive contains and updates the metadata, wherein following steps are included:
- receiving data-streams including metadata;
- parsing and extracting metadata automatically as well as categorized into Content Metadata, DVB-Metadata or User Metadata;
- transforming said metadata into XML-metadata-descriptors;
- identifying transformed metadata for financial investment-descriptors, wherein the descriptors are referenced by an indicator, e. g. MIME, or by a link, e. g. URI;
- storing of the metadata-descriptors into a database, e. g. a DBMS-database;
- providing access to the metadata-archive using an analyzing software, a query and browsing mechanism via a graphical user interface;
- saving and archiving DVR-metadata on a storage medium, e. g. discs.

The invention can also be used with other data transmitted via Teletext and is not limited to stock-exchange information.

Besides, the user can get easy access to the daily and long-time development about his favorite stock and investment-funds values.

Advantageous additional embodiments of the invention are disclosed in the respective dependent claims.

### Drawings

Exemplary embodiments of the invention are described with reference to the accompanying drawings, which show in:
- Fig. 1: Simple Block Diagram of the Inventive Apparatus;
- Fig. 2: Structure of the Inventive Method;
- Fig. 3: Structure of the Referencing-Block.

### Specific abbreviations used in this invention

- GUI: Graphical User Interface
- DBMS: Data Base Management System
- XML: Extended Markup Language
- DVR: Digital Video Recorder
- DVB-SI: Digital Video Broadcast-Service Information
- MIME: Multipurpose Internet Mail Extension
- URI: Uniform Resource Identifier
- URI: Uniform Resource Locator
- URN: Uniform Resource Name
- MACD: Moving Average Convergence / Divergence

### Exemplary embodiments

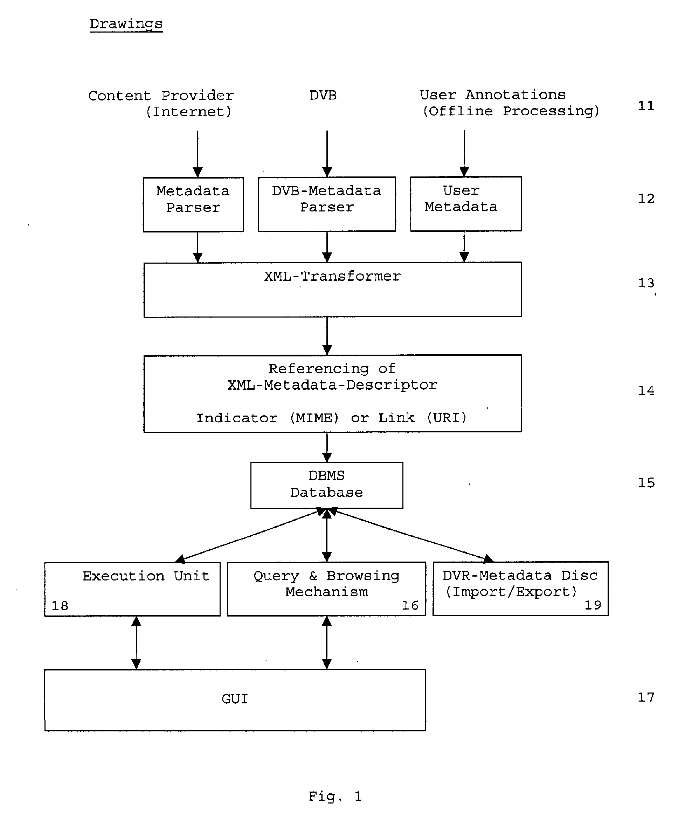

Fig. 1 shows a simple block diagram of the invention. The purpose of the invention is to analyze financial investments by a resident metadata-archive stored in a digital recorder. The analysis of financial investments by a resident metadata-archive stored in a digital recorder will be carried out with the following means:
- receiving means 11 for data-streams, including metadata, e. g. from content metadata, from DVB-data, or from user annotations;
- parser, automatic extracting means and categorizing means 12 of found metadata into the above said content metadata, DVB-metadata or user metadata;
- transforming means for metadata 13 into XML-metadata-descriptors;
- metadata-identifyer and descriptor-referencing means 14 for the transformed metadata for financial investment-descriptors; wherein said descriptors are referenced by an indicator, or by a link;
- storing means 15 for the metadata-descriptors into a database;
- analyzing means 18 to provide access to the metadata-archive; a query and browsing-mechanism 16 will enable the communication between the user and the stock-exchange-analysis via a GUI 17;
- means 19 to save and archive DVR-metadata on discs.

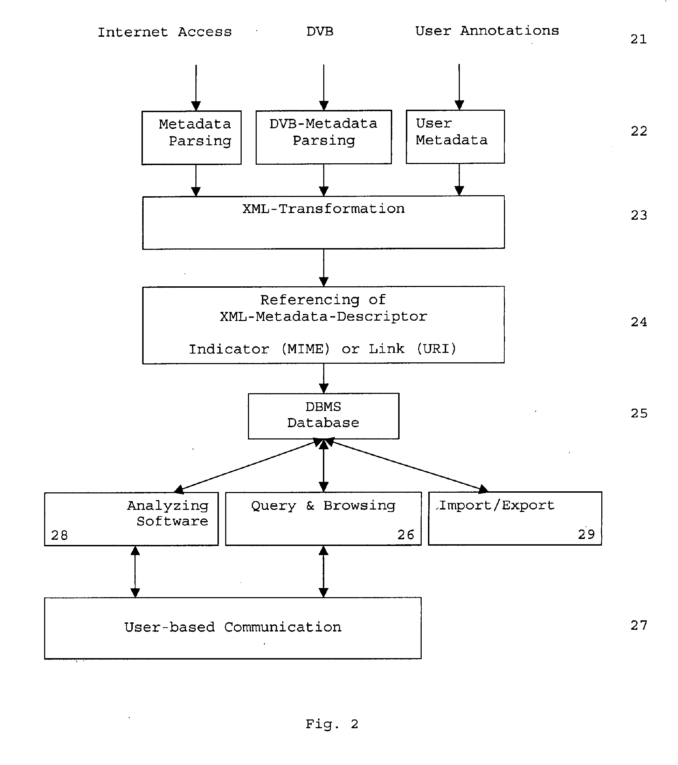

Fig. 2 shows the structure of the inventive apparatus. Said apparatus will evaluate trade-signals for analyzing financial investments, being stored in a digital recorder. These data will be saved in a resident metadata-archive. Data-streams will be received 21 for reception of data-streams including metadata; the metadata will hereafter be automatically parsed, extracted and categorized into content metadata, DVB-metadata or user metadata. The next steps are transcription of the native metadata-coding (e.g. DVB-SI binary format) into XML-metadata-descriptors 13 and identification of said transformed metadata for financial investment-descriptors 14.
A database 15 will store metadata-descriptors into a database, e. g. DBMS. A software-module 18 will provide access to the metadata-archive and a query/browser 16 allows access via a graphical user interface 17. Eventually, it is possible to save and archive DVR-metadata via discs 19.

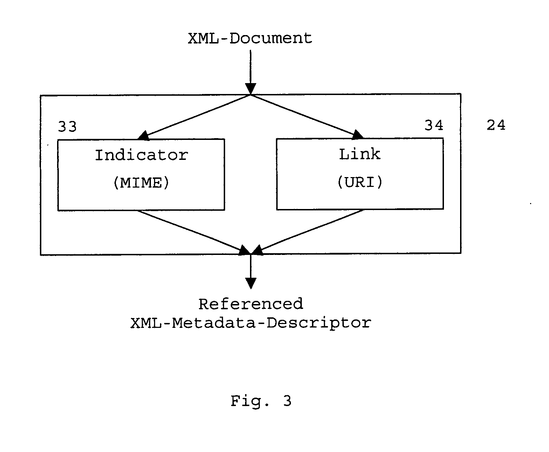

Fig. 3 shows the internal structure of the referencing-block 24. The XML document concerning financial investment matter will be referenced either by an indicator (MIME) 33, or by a link (URI) 34, where the execution software will be located.

The invention can be used in connection with analyzing and generating stock-trade signals (buy, hold, sell) with the help of a digital recorder and a resident metadata-archive.

Evaluation of long-time and of short-time charts in different variants and graphical output (e. g. line, column, candle-stick). In order to make visible changes of stock development, graphical output is necessary. Also, the graphic output of calculated prognostic charts (e. g. MACD, stochastic) can be implemented.

From these prognostic charts, trading signals (buy, sell, hold) can be generated individually by weighting of different technical indicators depending on economic trends.

The personal share-portfolio can be analyzed and can be controlled for efficiency with the help of this solution. The current stock of shares can be thus submitted to a continuous check, so that no only specific shares are visualized, but the whole stock of shares is being controlled.

Another important feature is the analysis of a personal watchlist, which need not contain only the shares purchased. Also, other interesting future investments can be kept in a personal watchlist.

All features of the present solution will update automatically and metadata concerning financial investments will be evaluated in a background process, highlighting a window when interesting trading signals are generated.

## Claims

1. Method for electronically analyzing data amounts by a resident metadata-archive stored in a digital recorder, **characterized in that** the resident metadata-archive contains and updates the metadata, wherein following steps are included:
- receiving data-streams including metadata (21);
- parsing and extracting metadata automatically (22) as well as categorized into Content Metadata, DVB-Metadata or User Metadata;
- transforming (23) said metadata into XML-metadata-descriptors;
- identifying (24) transformed metadata for financial investment-descriptors, wherein the descriptors are referenced by an indicator, e. g. MIME, or by a link, e. g. URI;
- storing of the metadata-descriptors into a database (25) , e. g. DBMS-database;
- providing access to the metadata-archive using an analyzing software (28), a query and browsing mechanism (26) via a graphical user interface (27);
- saving and archiving DVR-metadata on a storage medium, e. g. discs.

2. Method according to claim 1, wherein said data amounts are financial investment-data.

3. Method according to claims 1 or 2, wherein the received data-streams are originated from, but not limited to:
- Content, e. g. Teletext, Internet;
- DVB-data, e. g. DVB-transport-stream; or
- Offline-process, e. g. User Annotations.

4. Method according to one of claims 1-3, wherein user-defined metadata (watchlists or portfolio lists) support and control a comfortable stock-watching.

5. Method according to one of claims 1-4, wherein evaluation of long-time and of short-time charts in different variants and graphical output (e. g. line, column, candle-stick, MACD) is performed, by weighting of different technical indicators depending on economic trends.

6. Method according to one of claims 1-5, wherein the steps of claim 1 are updated automatically and requested metadata are evaluated in a background process, highlighting a window when interesting trading signals are generated.

7. Apparatus for electronically evaluating trade-signals for analyzing financial investments, which are stored in a digital recorder, **characterized in that** a resident metadata-archive contains and updates the metadata, the apparatus including:
- means (11) for reception of data-streams, which include metadata;
- means (12) for automatically parsing and extracting metadata and for categorizing metadata into Content Metadata, DVB-Metadata or User Metadata;
- means (13) for transforming metadata into XML-metadata-descriptors;
- means (14) for identifying said transformed metadata for financial investment-descriptors;
- means (15) for storing metadata-descriptors into a database, e. g. DBMS;
- means (18) for providing access to the metadata-archive with the help of an analyzing software;
- means (16) for querying and browsing via a GUI (17);
- means (19) for saving and archiving DVR-metadata via disc.
